# EUROPEAN PATENT APPLICATION

(11) **EP 4 672 649 A1**
(43) Date of publication of application: **31.12.2025**
(21) Application number: 24822629.2
(22) Date of filing: 06.06.2024
(51) Int. Cl.: H04L 1/00

(54) **COMMUNICATION METHOD, COMMUNICATION DEVICE, AND STORAGE MEDIUM**

(30) Priority: 13.06.2023 CN 202310698287
(71) Applicant: ZTE Corporation, Shenzhen, Guangdong 518057 (CN)
(72) Inventor: JIANG, Yi, Shenzhen, Guangdong 518057 (CN); YUAN, Liquan, Shenzhen, Guangdong 518057 (CN); ZHANG, Weiliang, Shenzhen, Guangdong 518057 (CN)
(74) Representative: Aipex B.V.
(86) International application number: PCT/CN2024/097751
(87) International publication number: WO 2024/255678

(57) **Abstract**

Provided are a communication method and device and a storage medium. The communication method applied to the first communication device includes sending a first message to a second communication device, where the first message includes flexible configuration content supported by the first communication device; receiving a second message determined by the second communication device according to the first message, where the second message includes a first communication device identifier and specific configuration content; and configuring the first communication device according to the second message to enable the first communication device to operate according to the specific configuration content.

## Description

### TECHNICAL FIELD

The present application relates to the field of communications technology, for example, a communication method and device and a storage medium.

### BACKGROUND

A conventional point-to-multipoint (P2MP) passive optical network (PON) system uses a single modulation scheme, a single transmission rate, and a single forward error correction code type that are all non-configurable, resulting in problems of low network resource utilization, high power consumption, and high costs of the entire passive optical network.

### SUMMARY

Embodiments of the present application provide a communication method and device and a storage medium, thereby improving the utilization rate of network resources in a PON system and reducing power consumption and overall costs.

An embodiment of the present application provides a communication method. The method is applied to a first communication device. The communication method applied to the first communication device includes sending a first message to a second communication device, where the first message includes flexible configuration content supported by the first communication device; receiving a second message determined by the second communication device according to the first message, where the second message includes a first communication device identifier and specific configuration content; and configuring the first communication device according to the second message to enable the first communication device to operate according to the specific configuration content.

An embodiment of the present application provides a communication method. The method is applied to a second communication device. The communication method applied to the second communication device includes receiving a first message sent by each first communication device, where the first message includes flexible configuration content supported by the first communication device; determining a corresponding second message according to the first message, where the second message includes a first communication device identifier and specific configuration content; and sending the second message to the first communication device to enable the first communication device to receive the second message and perform configuration and operate according to the specific configuration content.

An embodiment of the present application provides a first communication device. The first communication device includes a memory and at least one processor. The memory is configured to store at least one program. When executed by the at least one processor, the at least one program causes the at least one processor to perform the communication method of any previous embodiment.

An embodiment of the present application provides a second communication device. The second communication device includes a memory and at least one processor. The memory is configured to store at least one program. When executed by the at least one processor, the at least one program causes the at least one processor to perform the communication method of any previous embodiment.

An embodiment of the present application provides a storage medium storing a computer program which, when executed by a processor, causes the processor to perform the communication method of any previous embodiment.

### BRIEF DESCRIPTION OF DRAWINGS

FIG. 1 is a diagram illustrating the structure of a PON system according to the related art.
FIG. 2 is a flowchart of a communication method according to an embodiment of the present application.
FIG. 3 is a flowchart of a communication method according to an embodiment of the present application.
FIG. 4 is a block diagram of a PON system according to an embodiment of the present application.
FIG. 5 is a diagram of a data frame structure that can be used in the downstream direction according to the present application.
FIG. 6 is a diagram of a first-type data frame structure in the downstream direction according to an embodiment of the present application.
FIG. 7 is a diagram of a first-type data frame structure in the downstream direction according to an embodiment of the present application.
FIG. 8 is a diagram of a second-type data frame structure in the downstream direction according to an embodiment of the present application.
FIG. 9 is a diagram of a third-type data frame structure in the downstream direction according to an embodiment of the present application.
FIG. 10 is a diagram of a fourth-type data frame structure in the downstream direction according to an embodiment of the present application.
FIG. 11 is a flowchart of framing of a downstream FS mixed frame according to an embodiment of the present application.
FIG. 12 is a diagram of a data frame structure that can be used in the upstream direction according to an embodiment of the present application.
FIG. 13 is a diagram of a first-type data frame structure in the upstream direction according to an embodiment of the present application.
FIG. 14 is a diagram of a first-type data frame structure in the upstream direction according to an embodiment of the present application.
FIG. 15 is a flowchart of sending an OLT signal in the downstream direction according to an embodiment of the present application.
FIG. 16 is a flowchart of receiving an ONU signal in the downstream direction according to an embodiment of the present application.
FIG. 17 is a flowchart of sending an ONU signal in the upstream direction according to an embodiment of the present application.
FIG. 18 is a flowchart of receiving an OLT signal in the downstream direction according to an embodiment of the present application.
FIG. 19 is a diagram of flexible configuration in an activation and registration phase according to an embodiment of the present application.
FIG. 20 is a diagram of flexible configuration in an activation and registration phase according to an embodiment of the present application.
FIG. 21 is a diagram of flexible configuration in a working state according to an embodiment of the present application.
FIG. 22 is a block diagram of a communication apparatus according to an embodiment of the present application.
FIG. 23 is a block diagram of a communication apparatus according to an embodiment of the present application.
FIG. 24 is a diagram illustrating the structure of a communication device according to an embodiment of the present application.

### DETAILED DESCRIPTION

Embodiments of the present application are described hereinafter in conjunction with drawings. The present application is described hereinafter in conjunction with embodiments and drawings. The examples illustrated are intended to explain the present application.

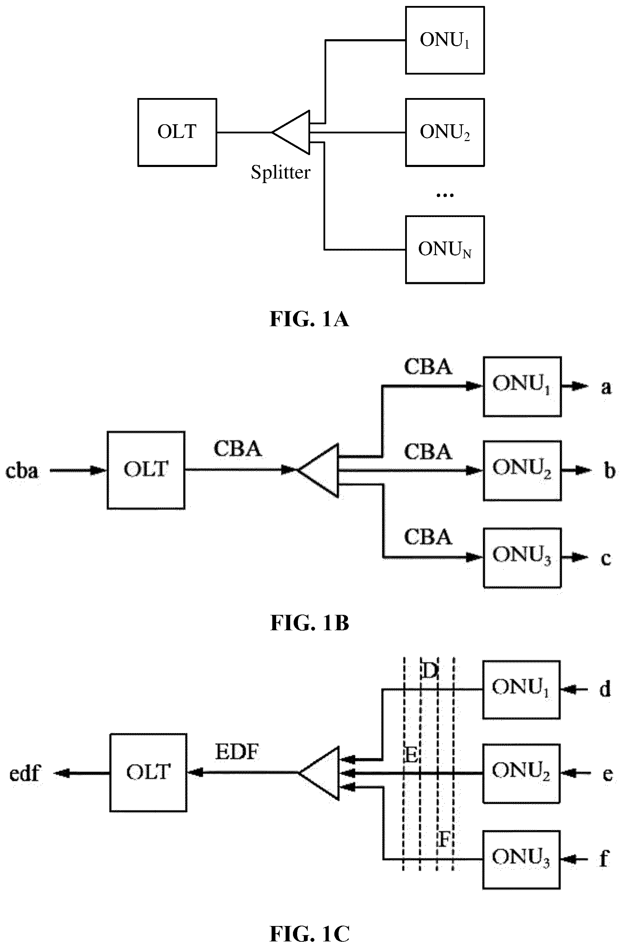

FIG. 1 is a diagram illustrating the structure of a PON system according to the related art. FIG. 1A shows a PON system with a P2MP structure, the most common network structure of a home access network. FIG. 1B and FIG. 1C are diagrams of upstream and downstream signal transmission under this structure.

In the downstream direction defined by standards such as ITU-T G.9804.2 (International Telecommunication Union Telecommunication Standardization Sector), an optical line terminal (OLT) encapsulates user data into a physical frame structure of a certain format. The encapsulated data is then transmitted via an optical module to an optical distribution network (ODN). After undergoing various attenuation and transmission losses, the optical signal transmitted by the OLT becomes significantly weakened and is eventually received by all optical network units (ONUs) connected to the ODN. In a PON system, the equivalent delay compensation technology ensures that the equivalent transmission delay from each ONU to the OLT is the same. With the upstream bandwidth allocation technology, the transmission time slots of upstream burst signals from each ONU are strictly controlled, thereby avoiding collisions in upstream signal transmission.

In addition, in both downstream broadcast transmission and upstream burst transmission, a forward error correction (FEC) technology is used to improve the fault tolerance capability of an optical channel. Thus an optical fiber communication mode using 3-Intensity Modulation/Direct Detection (IM/DD) can also reach a transmission rate of 50 Gbps.

However, due to the different geographical locations of the ONUs as well as variations in optical fiber length, optical splitter level, and optical splitting ratio, the same optical signal experiences different dispersion penalties, optical power levels, and jitter when reaching the ONUs. As a result, the quality of the signal received from the OLT varies significantly among the ONUs.

To satisfy the quality of service (QoS) requirements at the receiving end, the ITU-T standards define stringent specifications to ensure that even the farthest ONU with the greatest optical path loss (OPL) can correctly receive the same service data as the ONU with the lowest OPL. The PON system uses a standardized specification that includes a fixed downstream rate on a single wavelength, multiple upstream wavelength options, multiple upstream rates, and a unified FEC code type for downstream transmission.

However, according to the central limit theorem and actual engineering measurement data, the number of ONUs in the worst-case scenario within a PON system is relatively small. As a result, formulating standards based on the worst reception conditions across the entire network inevitably leads to significant waste of network resources and a substantial increase in the overall costs. Therefore, the rational optimization and deployment of overall network resources-aimed at reducing energy consumption and costs while maximizing the return on investment-have become key areas of interest and focus for both operators and equipment vendors in the research and development of future PON systems.

The present application also aims to address the problems of low transmission efficiency, high power consumption, and high costs in traditional networks by disclosing a PON system that has a point-to-multipoint (P2MP) architecture, uses single-wavelength communication, and supports flexible configuration. The flexibly configurable PON system disclosed in the present application can flexibly adjust the configurations of individual ONUs based on the channel conditions between the ONUs and the OLT as well as user service requirements. These configurations may include modulation schemes, line rates, and FEC code types to improve the network transmission quality. For example, the system may modify line coding to increase data transmission rates, reduce the overhead of forward error correction to enhance service data throughput, or strengthen FEC error correction capabilities to improve signal transmission over degraded channels and thus ensure the quality of service (QoS). Through flexible configuration of network devices such as the OLT and ONUs, the system enables higher transmission efficiency and lower overall costs, benefiting both operators and end users.

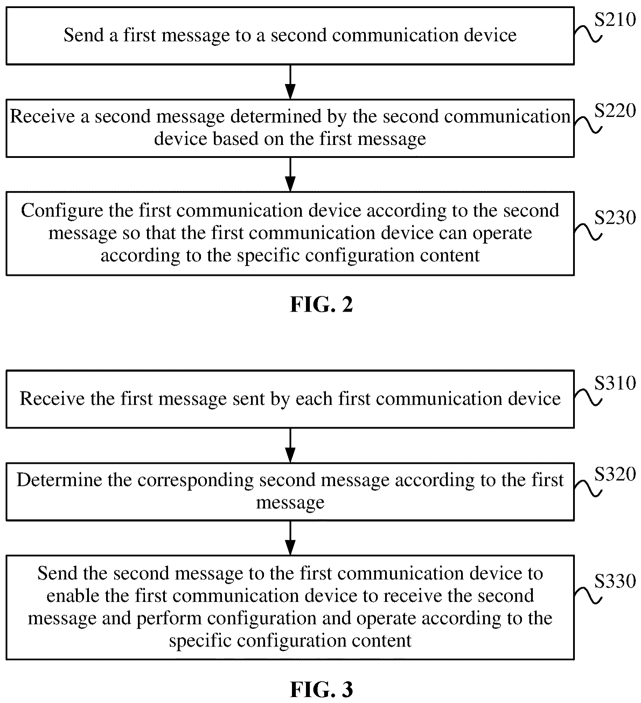

In an embodiment, FIG. 2 is a flowchart of a communication method according to an embodiment of the present application. This embodiment may be implemented by a first communication device. In this embodiment, the first communication device (also referred to as the first communication node) may be an ONU. As shown in FIG. 2, this embodiment includes S210 to S230.

In S210, a first message is sent to a second communication device.

The first message includes flexible configuration content supported by the first communication device. In an embodiment, the first communication device may send all flexible configuration content supported by the first communication device to the second communication device at a time, that is, the first message includes all flexible configuration content supported by the first communication device; or the first communication device may send all flexible configuration content supported by the first communication device to the second communication device in batches, that is, the first message includes some flexible configuration content supported by the first communication device. By way of example, the first message may be a physical layer operations, administration, and maintenance (PLOAM) message or may be an optical network unit management and control interface (OMCI) message.

In S220, a second message determined by the second communication device based on the first message is received.

The second message includes a first communication device identifier and specific configuration content. In an embodiment, after the second communication device receives the flexible configuration content supported by the second communication device and sent by the first communication device, the second communication device determines the specific configuration content based on the flexible configuration content supported by the first communication device. In addition, the second message includes the first communication device identifier for configuration of the identifier of the first communication device.

In S230, the first communication device is configured according to the second message so that the first communication device can operate according to the specific configuration content.

In an embodiment, after receiving the second message, the first communication device performs data transmission based on the specific configuration content in the second message.

In an embodiment, the first message includes at least one piece of the following flexible configuration content: a modulation and demodulation scheme; line coding; forward error correction encoding and decoding; upstream and downstream wavelength options; upstream and downstream sub-wavelength options; or a switchable clock frequency. In the upstream direction, the first communication device may use multiple modulation schemes and multiple types of forward error correction encoding, and the second communication device may use multiple demodulation schemes and multiple types of forward error correction decoding. In the downstream direction, the second communication device may use multiple modulation schemes and multiple types of forward error correction encoding, and the first communication device may use multiple demodulation schemes and multiple types of forward error correction decoding.

In an embodiment, the communication method applied to the first communication device also includes receiving dedicated synchronization data sent by the second communication device to receive dedicated configuration content sent by the second communication device. Correspondingly, configuring the first communication device according to the second message to enable the first communication device to operate according to the specific configuration content includes configuring the first communication device according to the dedicated configuration content to enable the first communication device to operate according to the dedicated configuration content. In an embodiment, the first communication device may receive the dedicated synchronization data sent by the second communication device to enable the first communication device to receive the dedicated configuration content sent by the second communication device; and the first communication device is configured according to the dedicated configuration content so that the first communication device can operate according to the dedicated configuration content.

In an embodiment, the communication method applied to the first communication device also includes receiving general synchronization data sent by the second communication device to receive the specific configuration content sent by the second communication device, where the specific configuration content includes basic configuration content or dedicated configuration content.

In an embodiment, the communication method applied to the first communication device also includes feeding back a configuration acknowledgement message carrying configuration effective superframe information to the second communication device to enable the second communication device to send downstream data at an effective time according to the configuration effective superframe information; and receiving, at the effective time, the downstream data sent by the second communication device. In an embodiment, after the first communication device completes the configuration update according to the specific configuration content sent by the second communication device, the first communication device feeds back the configuration acknowledgement message to the second communication device and notifies the second communication device of the configuration effective superframe information so that the second communication device can send the downstream data by using the specific configuration content at the effective time and the first communication device can receive the data at the corresponding time.

In an embodiment, the specific configuration content in the second message includes at least one of the following: a modulation and demodulation scheme used by the first communication device, line coding used by the first communication device, a forward error correction decoding code type used by the first communication device in a downstream direction; a forward error correction encoding code type used by the first communication device in an upstream direction; upstream and downstream wavelength or sub-wavelength options used by the first communication device; or a clock frequency to which the first communication device is switched. In an embodiment, the second communication device may reconfigure one or more pieces of flexible configuration content in the first message, that is, the specific configuration content in the second message may include one or more pieces of flexible configuration content. For example, if the second communication device reconfigures only the line code used by the first communication device, the second communication device sends the newly configured line code to the first communication device, and other configuration content of the first communication device remains the previous configuration content.

In an embodiment, the configuration acknowledgement message includes at least a category and a cause of a configuration failure of the first communication device; and the configuration effective superframe information of the first communication device. In an embodiment, the configuration acknowledgement message is an upstream message. The meanings of specific bits are newly defined in the configuration acknowledgement message sent by the first communication device to the second communication device. For example, part of the bits in the configuration acknowledgement message are used to feed back the type and cause of the configuration failure of the first communication device, and part of the bits are used to feed back the configuration effective superframe information of the first communication device.

In an embodiment, the communication method applied to the first communication device also includes performing, according to an optical signal feature, signal identification and splitting on an optical signal sent by the second communication device; and inputting optical signals with a similar optical signal feature to a corresponding demodulation module for demodulation. In an embodiment, after the first communication device completes activation and registration, the first communication device may perform signal identification and splitting on the received optical signal based on the optical signal feature and then input optical signals with a similar optical signal feature to a corresponding demodulation module for demodulation.

In an embodiment, in the upstream direction, the communication method applied to the first communication device also includes generating an upstream physical frame and transmitting an optical signal to the second communication device according to specific transmission configuration content. Information about a specific first communication device is uploaded in the upstream direction in a burst mode. The first communication device determines, based on a bandwidth allocated by the second communication device in a dynamically bandwidth assignment (DBA), data required to be sent; and generates a burst upstream physical frame and transmits an optical signal to the second communication device according to the specific transmission configuration content configured by the second communication device.

In an embodiment, the specific transmission configuration content includes basic transmission configuration content or dedicated transmission configuration content; and the basic transmission configuration content and the dedicated transmission configuration content each include at least one of the following: upstream line coding, a modulation and demodulation scheme, forward error correction encoding, an upstream rate, or a transmission wavelength.

In an embodiment, in the upstream direction, an upstream data frame structure of the first communication node includes at least a first-type data frame. In the upstream direction, each first communication device sends a burst signal independently, that is, a frame structure similar to the first-type data frame in the downstream direction is used in the upstream direction.

In an embodiment, an upstream framing sub-layer (FS) frame of the first-type data frame uses first-type line coding or second-type line coding; and the first-type line coding and the second-type line coding use the same forward error correction code type. In an embodiment, the FS frame of the first-type data frame uses first-type line coding or second-type line coding; and the first-type line coding and the second-type line coding use the same forward error correction code type.

In an embodiment, an upstream FS frame of the first-type data frame uses first-type line coding or second-type line coding; and the first-type line coding uses a first-type forward error correction code type, and the second-type line coding uses a second-type forward error correction code type. In an embodiment, the FS frame of the first-type data frame uses first-type line coding or second-type line coding; and the first-type line coding and the second-type line coding use different forward error correction code types. For example, the first-type line coding uses the first-type forward error correction code type, and the second-type line coding uses the second-type forward error correction code type; or the first-type line coding uses the second-type forward error correction code type, and the second-type line coding uses the first-type forward error correction code type.

In an embodiment, FIG. 3 is a flowchart of a communication method according to an embodiment of the present application. This embodiment can be implemented by the second communication device. In this embodiment, the second communication device (also referred to as the second communication node) may be an OLT. As shown in FIG. 3, this embodiment includes S310 to S330.

In S310, the first message sent by each first communication device is received.

The first message includes flexible configuration content supported by the first communication device.

In S320, the corresponding second message is determined according to the first message.

The second message includes the first communication device identifier and the specific configuration content.

In S330, the second message is sent to the first communication device to enable the first communication device to receive the second message and perform configuration and operate according to the specific configuration content.

In an embodiment, the second communication device receives the first message sent by each first communication device, determines the second message corresponding to the first communication device according to the first message, and sends the second message to each corresponding first communication device to enable the first communication device to receive the second message and perform configuration and operate according to the specific configuration content.

In an embodiment, the communication method applied to the second communication device also includes configuring, according to the second message, configuration content of the second communication device corresponding to the first communication device. The configuration content of the second communication device corresponding to the first communication device includes at least one piece of the following flexible configuration content: a modulation and demodulation scheme; line coding; forward error correction encoding and decoding; upstream and downstream wavelength options; or upstream and downstream sub-wavelength options. In an embodiment, after determining the corresponding second message according to the first message, the second communication device performs response configuration on the configuration content of the second communication device corresponding to the first communication device according to the second message to enable the second communication device to correctly receive information from the first communication device or correctly send information about the first communication device.

In an embodiment, the communication method applied to the second communication device also includes sending dedicated synchronization data to the first communication device to enable the first communication device to receive dedicated configuration content; and configuring the first communication device according to the dedicated configuration content to enable the first communication device to operate according to the dedicated configuration content.

In an embodiment, the communication method applied to the second communication device also includes sending general synchronization data to the first communication device to enable the first communication device to receive the specific configuration content. The specific configuration content includes basic configuration content or dedicated configuration content.

In an embodiment, the communication method applied to the second communication device also includes receiving a configuration acknowledgement message that is fed back by the first communication device and that carries configuration effective superframe information; and sending downstream data to the first communication device at an effective time according to the configuration effective superframe information.

In an embodiment, the configuration acknowledgement message includes at least a category and a cause of a configuration failure of the first communication device; and the configuration effective superframe information of the first communication device.

In an embodiment, in the downstream direction, the communication method applied to the second communication device also includes grouping service data units of the first communication device according to attribute information to obtain a corresponding service data unit set; and performing attribute indication and generating a downstream data frame according to attribute information of each service data unit set in a frame structure. The attribute information includes one of the following: optical network unit (ONU) line coding, forward error correction decoding, or a synchronization data block required by an ONU.

In an embodiment, in the upstream direction, the communication method applied to the second communication device also includes selecting, according to bandwidth allocation, a receiver matching specific transmission configuration content of the first communication device to receive an optical signal, wherein the receiver satisfies a dedicated receiving configuration requirement matching the specific transmission configuration content of the first communication device and receives information transmitted by the first communication device.

In an embodiment, the specific receiving configuration requirement includes a basic receiving configuration requirement or a dedicated receiving configuration requirement; and the basic receiving configuration requirement and the dedicated receiving configuration requirement each include at least one of the following: line coding, a demodulation scheme, forward error correction decoding, an upstream rate, a receiving wavelength option, or a receiving sub-wavelength option.

In an embodiment, in the downstream direction, a downstream data frame structure of the second communication device includes at least one of the following: a first-type data frame, a second-type data frame, a third-type data frame, or a fourth-type data frame.

In an embodiment, a downstream framing sub-layer (FS) frame of the first-type data frame uses first-type line coding or second-type line coding; and the first-type line coding and the second-type line coding use the same forward error correction code type.

In an embodiment, a downstream FS frame of the first-type data frame uses first-type line coding or second-type line coding; and the first-type line coding uses a first-type forward error correction code type, and the second-type line coding uses a second-type forward error correction code type.

In an embodiment, a downstream FS frame of the second-type data frame uses first-type line coding or second-type line coding; and the first-type line coding and the second-type line coding use a first-type forward error correction code type and a second-type forward error correction code type.

In an embodiment, both a downstream FS frame of the third-type data frame and a downstream FS frame of the fourth-type data frame use first-type line coding and second-type line coding; and both the third-type line coding and the fourth-type line coding use a first-type forward error correction code type or a second-type forward error correction code type.

For explanations of parameters such as the first message, the second message, the specific configuration content, and the configuration acknowledgment message in the communication method applied to the second communication device, see descriptions of corresponding parameters in the communication method applied to the first communication device. The details are not described here again.

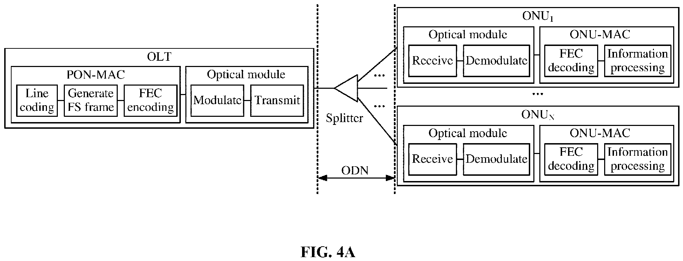

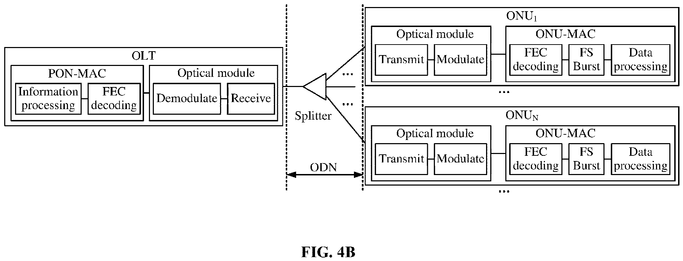

The following provides some embodiments to explain the communication method of embodiments of the present application. FIG. 4 is a block diagram of a PON system according to an embodiment of the present application. In this embodiment, the first communication device is an ONU, the second communication device is an OLT, and the PON system includes N ONUs. As shown in FIG. 4, the PON system includes the downstream direction (as shown in FIG. 4A) and the upstream direction (as shown in FIG. 4B).

This embodiment of the present application may be divided into four parts: (1) data frame structures for upstream and downstream; (2) signal reception and transmission processes for upstream and downstream; (3) configuration and interaction processes of the flexible PON system; and (4) interaction messages for configuration of the flexible PON system.

As shown in FIG. 4, the internal of the OLT and ONU devices may be divided into PON-medium access control (MAC) and optical modules. The part "data frame structures for upstream and downstream" describes configuration of the MAC layers in the OLT and ONU devices. The part "signal reception and transmission processes for upstream and downstream" systematically describes signal reception and transmission processes of the flexible PON system. The part "configuration and interaction processes of the flexible PON system" describes a method for flexibly configuring the PON system. This part relates to the device content that can be flexibly configured in the PON system, such as the MAC and optical modules. The part "interaction messages for configuration of the flexible PON system" describes examples of the interaction messages.

### (1) Data frame structures for upstream and downstream

For the PON system of the home access network, the upstream data frames have only one type of data frame structure, and the downstream data frames also have only one type of data frame structure. Using the G.9804.2 Common Transmission Convergence (ComTC) standard as an example, the physical frame with a nominal line rate of 49.7664 Gbit/s uses Non-Return-to-Zero (NRZ) line coding. The frame is encoded with low-density parity-check (LDPC) coding, forming a bitstream with a frame period of 125 µs, consisting of 360 LDPC (17280, 14592) codewords.

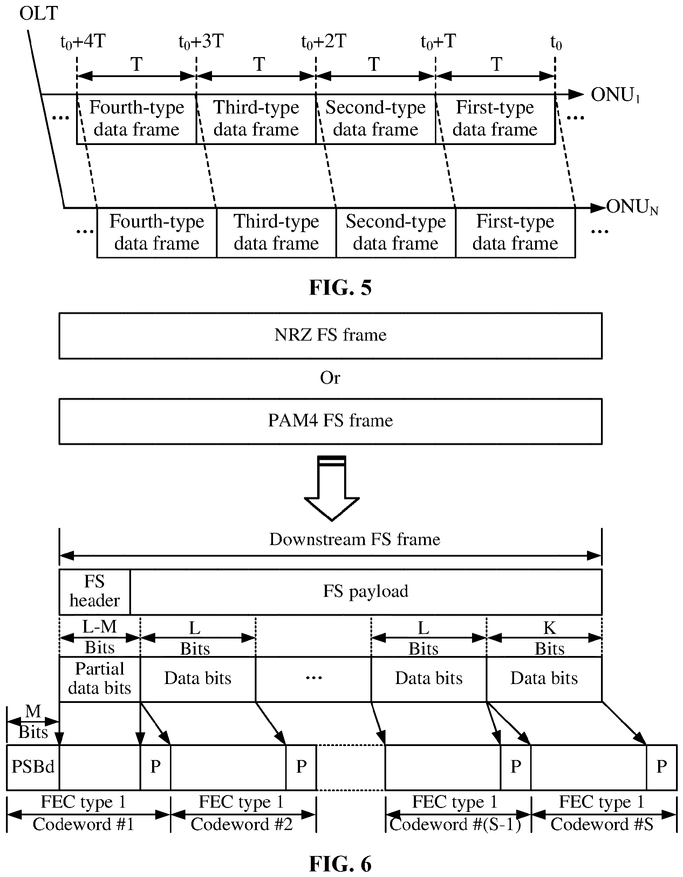

In the flexible PON system proposed in embodiments of the present application, four types of downstream data frame structures can be used. In the downstream direction, each type of data frame structure can be used independently, or two or more types of data frame structures can be used in combination. FIG. 5 is a diagram of a data frame structure that can be used in the downstream direction according to the present application. As shown in FIG. 5, this embodiment of the present application allows four types of data frame structures to be used concurrently in combination.

For examples of the four different types of downstream data frame structures shown in FIG. 5, see FIGS. 6 to 10.

FIG. 6 is a diagram of a first-type data frame structure in the downstream direction according to an embodiment of the present application. As shown in FIG. 6, the first-type data frame structure uses the same line coding method for the downstream FS frame, such as 4-pulse-amplitude modulation (PAM4), non-return-to-zero (NRZ), or dual-polarization quadrature phase shift keying (DP-QPSK), among others. Additionally, the same modulation scheme also uses the same type of FEC coding, with identical coding type and length, such as LDPC (17280, 14592).

In the first-type data frame structure, during the FEC encoding process, the downstream physical synchronization block (PSBd) and the initial portion of the FS frame jointly constitute the information bits of the first FEC codeword. Assuming the information bit length of the FEC codeword is constantly L bits and the length of the PSBd is M bits, then the first (L - M) bits of the FS frame participate in the encoding of the first FEC codeword. Given a fixed downstream rate, the bit length of each physical frame is constant. However, due to the variable lengths of the FS header and FS payload during FS framing, the length of each FS frame slightly differs. That is, after encoding (S - 1) FEC codewords per FS frame, the remaining K bits (where K ≤ L) vary. Therefore, zero-padding is required for the information bits of the final FEC codeword, with a padding length of (L - K) bits.

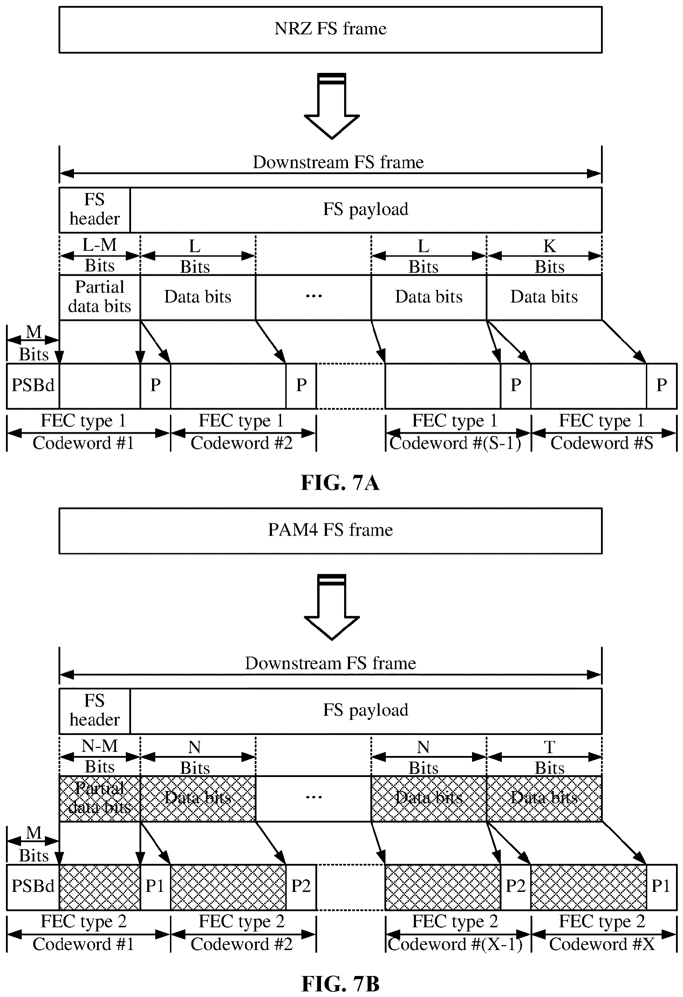

FIG. 7 is a diagram of a first-type data frame structure in the downstream direction according to an embodiment of the present application. The data frame structure shown in FIG. 6 is based on the frame structure defined in the G.9804.2 standard. G.9804.2 supports only NRZ line coding and LDPC (17280, 14592) FEC coding. However, this embodiment of the present application may use other line coding schemes and other FEC codeword lengths or types.

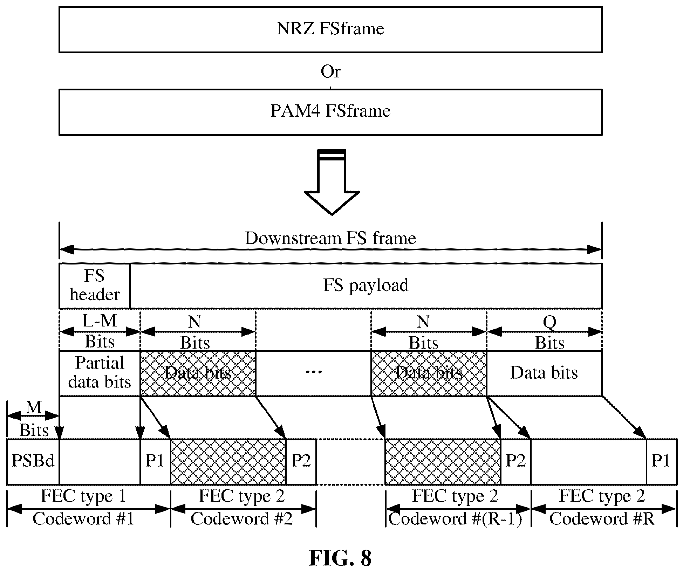

As shown in FIG. 7, the first-type data frame structure is extended. FIG. 7 illustrates a mixed downstream data frame structure, where PAM4 and NRZ line coding coexist. Each line coding scheme uses a different LDPC FEC codeword length (or FEC codeword type). That is, the first-type data frame structure in this embodiment of the present application can contain downstream data frames with different line coding and different FEC encoding. FIG. 8 is a diagram of a second-type data frame structure in the downstream direction according to an embodiment of the present application. As shown in FIG. 8, the second-type data frame structure uses the same line coding scheme (such as PAM4 or NRZ), but uses two or more different FEC coding schemes in combination. This type of data frame is applicable to scenarios where the OLT generates a mixed frame by using different downstream FEC codes for different ONUs to improve the service transmission quality. For example, some ONUs experience low optical path loss and support higher-throughput signal transmission, while others suffer from high optical path loss and require stronger FEC error correction capability to maintain communication. In such cases, downstream data for different types of ONUs are encoded using FEC codewords with different forward error correction capabilities, mixed into a single frame, and then broadcast in the downstream direction.

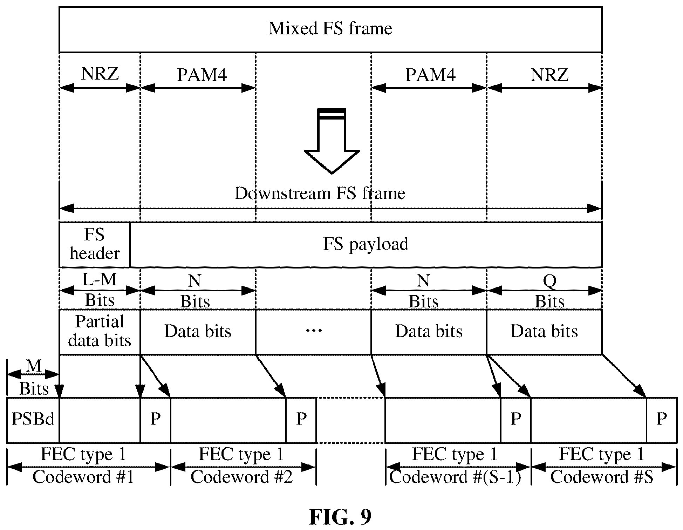

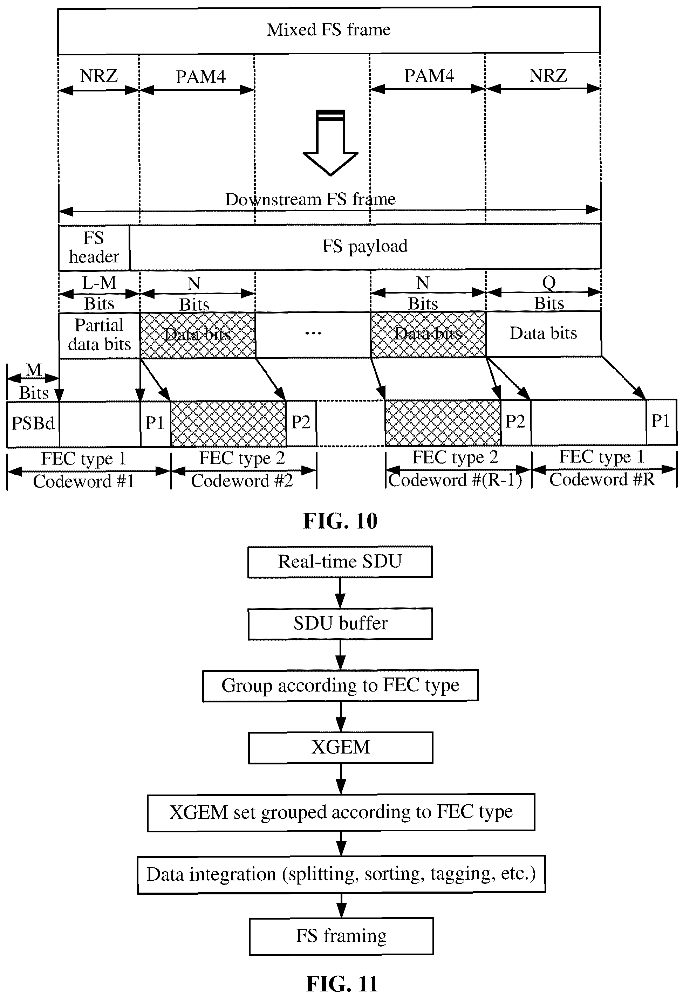

FIG. 9 is a diagram of a third-type data frame structure in the downstream direction according to an embodiment of the present application. FIG. 10 is a diagram of a fourth-type data frame structure in the downstream direction according to an embodiment of the present application. The first-type data frame structure and the second-type data frame structure both use the same line coding scheme. In contrast, the third-type data frame structure and the fourth-type data frame structure allow different line coding schemes, such as NRZ and PAM4, to coexist as separate data blocks within a single downstream physical data frame. In these two types of downstream data frame structures, it is required to group the service data units (SDUs) of different ONUs either during or prior to the FS framing process so that SDUs intended for ONUs using the same line coding scheme are aggregated to form homogeneous SDUs, which are then framed into FS frames. When heterogeneous SDUs are mixed into the same FS frame, they must be distinguishable from one another. This ensures that the OLT can perform FEC encoding using the same or different FEC code types as appropriate, and as illustrated in FIGS. 9 and 10, each ONU is still able to normally receive and decode corresponding data.

FIG. 11 is a flowchart of framing of a downstream FS mixed frame according to an embodiment of the present application. FIG. 11 illustrates the framing process of the third-type data frame structure, the fourth-type data frame structure, and the downstream FS mixed frame.

Since the downstream data requested by each ONU can be considered as arriving randomly at the OLT side, grouping SDUs of different types of ONUs-as opposed to the traditional approach-requires the OLT to maintain an SDU buffer. Based on the FEC code type configured for each ONU, the OLT aggregates the SDUs of all ONUs using the same FEC into one group. The OLT should avoid creating a group with only a small number of SDUs (to prevent prolonged transmission of IDLE data). If such a situation occurs, the OLT may increase the buffering time or adjust the FEC configuration of the corresponding ONU. Secondly, during the 10 Gigabit-PON Encapsulation Mode (XGEM) and FS framing process, SDUs of the same type need to undergo data processing such as splitting of data blocks, addition of splitting markers, zero padding, and sorting, based on the FEC codeword length of the reference group, so as to ensure that the OLT always performs encoding on SDUs of the same type during FEC encoding, and the ONU also always performs decoding on SDUs of the same type during FEC decoding.

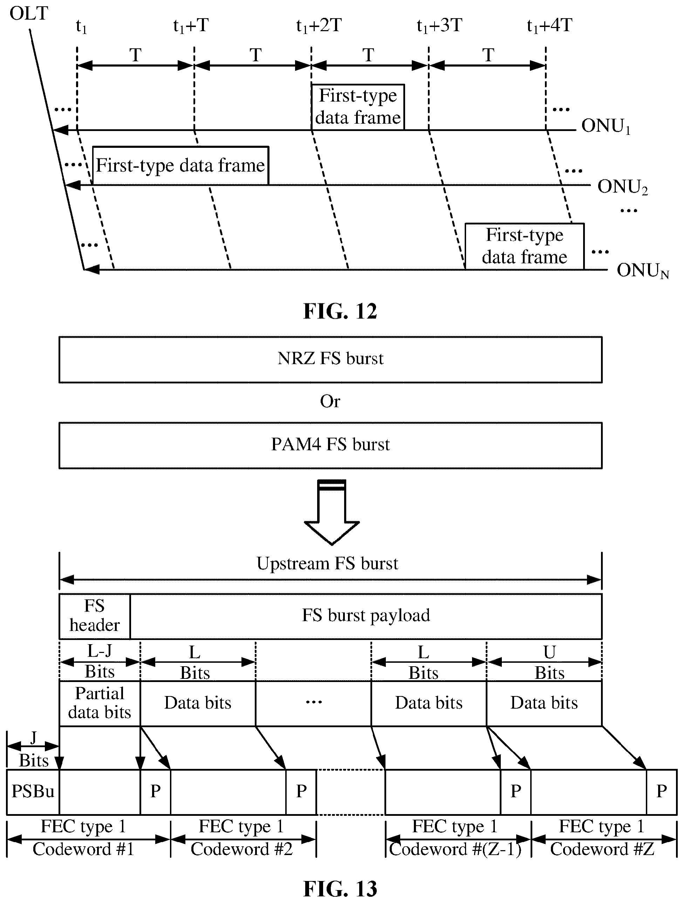

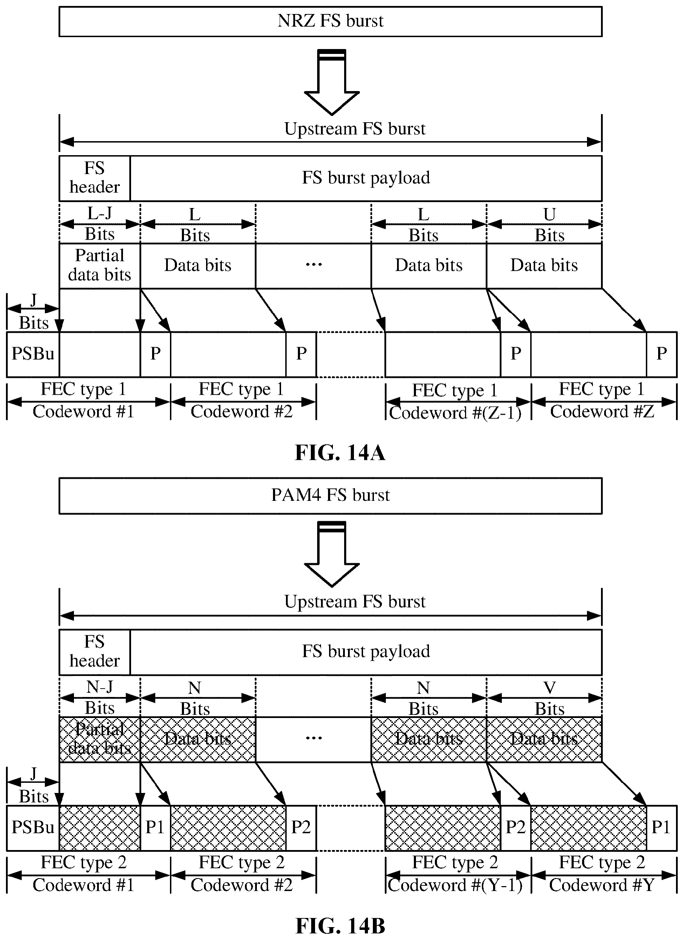

In the upstream direction, since each ONU sends a burst signal independently, the upstream direction should use a frame structure similar to the first-type data frame in the downstream direction. Moreover, since the length of each burst is determined by the bandwidth allocation through the BWmap of the OLT, the length of the upstream burst signal is related to the traffic volume of the ONU, and the length of the burst signal is highly flexible. FIG. 12 is a diagram of a data frame structure that can be used in the upstream direction according to an embodiment of the present application. As shown in FIG. 12, the first-type upstream data frame also needs to be constructed by using the FS burst from the G.9804.2 ComTC standard. FIG. 13 is a diagram of a first-type data frame structure in the upstream direction according to an embodiment of the present application. FIG. 14 is a diagram of a first-type data frame structure in the upstream direction according to an embodiment of the present application. FIGS. 13 and 14 show two possible examples. The difference between the two lies in the use of different line coding schemes, such as NRZ and PAM4, with the same FEC code type and different FEC code types applied for encoding.

### (2) Signal reception and transmission processes for upstream and downstream

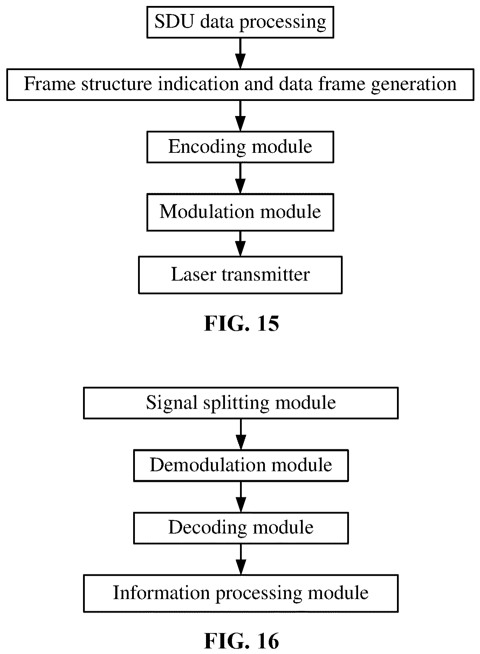

In the flexible PON system, due to the more flexible frame structure, the upstream and downstream data reception and transmission processes differ from those of traditional PON systems. FIG. 15 is a flowchart of sending an OLT signal in the downstream direction according to an embodiment of the present application. FIG. 16 is a flowchart of receiving an ONU signal in the downstream direction according to an embodiment of the present application.

In the downstream direction, the service data units (SDUs) arriving at the OLT are processed by the OLT according to the existing configurations of the ONUs. For example, the OLT performs data buffering or grouping based on certain rules to aggregate SDUs corresponding to ONUs with the same attributes. This facilitates subsequent attribute indication in the frame structure and generation of FS data frames. The attributes include line coding, FEC coding, and the transmission rate. The FS data frame passes through the FEC encoding module to form the downstream physical frame structure. Then, the physical frame structure data is sent to the modulation module for further signal processing and transmitted to the ODN, by the laser, for optical signal transmission.

At the receiving end of the ONU, the signal splitting module performs signal splitting based on the features of the optical signals and sends the optical signals with similar features to the corresponding demodulation module for demodulation. After demodulation, decoding is performed by the decoding module according to the frame structure indication in the downstream physical data frame, followed by subsequent information processing. In this embodiment, if a processing failure occurs during demodulation or decoding, it is feasible to directly discard the corresponding input data and process new input data.

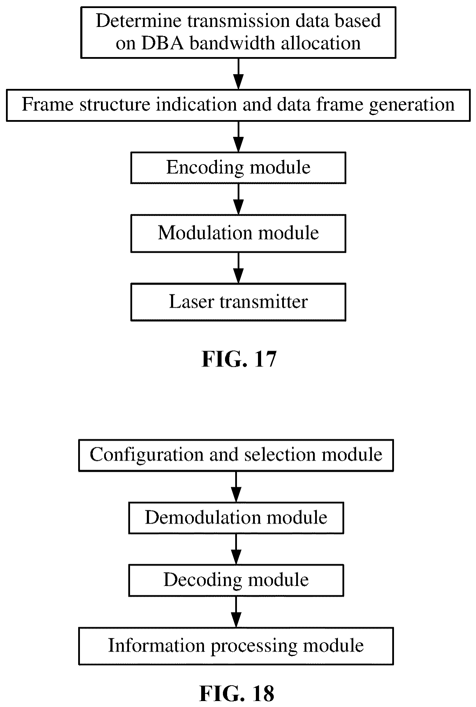

FIG. 17 is a flowchart of sending an ONU signal in the upstream direction according to an embodiment of the present application. FIG. 18 is a flowchart of receiving an OLT signal in the downstream direction according to an embodiment of the present application.

In the upstream direction, the data transmission process of the ONU is similar to that of the OLT. However, since the upstream involves transmitting information of a specific ONU in a burst mode, the ONU first determines the to-be-sent data according to the bandwidth allocated by the OLT in the DBA and generates the burst upstream physical frame and performs optical signal transmission according to the specific transmission configuration content configured by the OLT. The specific transmission configuration content includes at least one of the following: upstream line coding, modulation and demodulation scheme, FEC coding, upstream rate, or transmission wavelength. For the process of generating the burst frame, see the processes of NRZ line coding and LDPC (17280, 14592) forward error correction coding as specified in the G.9804.2 standard. The details are not described here. At the receiving end of the OLT, the OLT selects a receiver based on the bandwidth allocation in the DBA, where the selected receiver matches the specific transmission configuration content of the upstream ONU. The receiver satisfies the dedicated receiving configuration requirement that matches the specific transmission configuration content of the ONU and can correctly receive the information sent by the ONU. The specific receiving configuration requirement includes at least one of the following: line coding, a demodulation scheme, forward error correction decoding, an upstream rate, a receiving wavelength option, or a receiving sub-wavelength option.

### (3) Configuration and interaction processes of the flexible PON system

For the flexible PON system, the configuration may be performed during the activation and registration phase or may be performed in real time during normal operation. For the configuration and interaction performed during the activation and registration phase, the following cases are considered separately:
(1) Each ONU has a basic transmission and reception status that supports the most basic line coding, such as NRZ, and can also use the default FEC for encoding and decoding; ONU activation cycle: O1-O9 states.
(2) Each ONU has only a specific transmission and reception status that supports line coding and FEC not exactly the same.

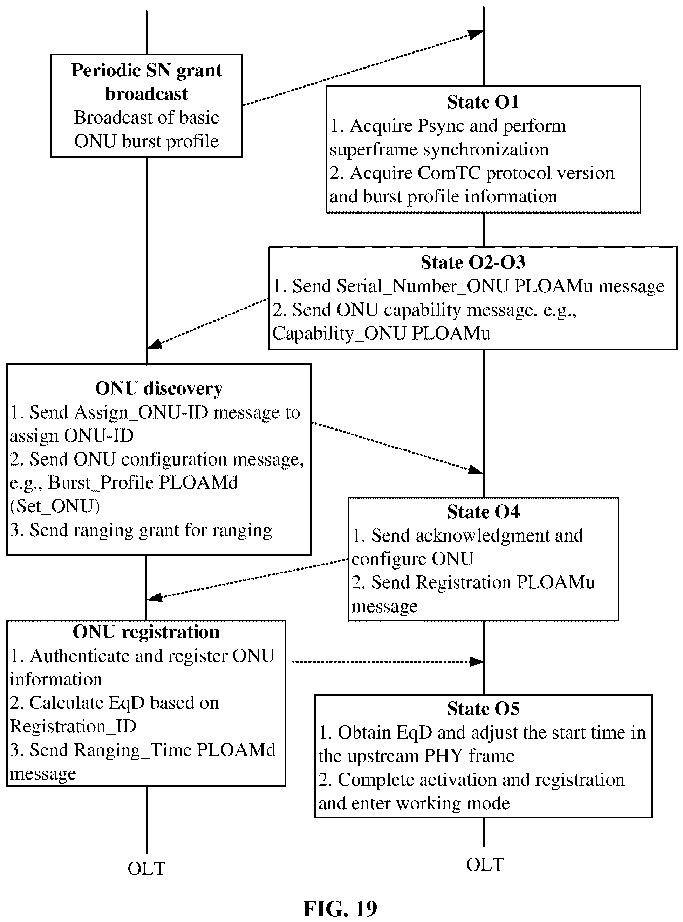

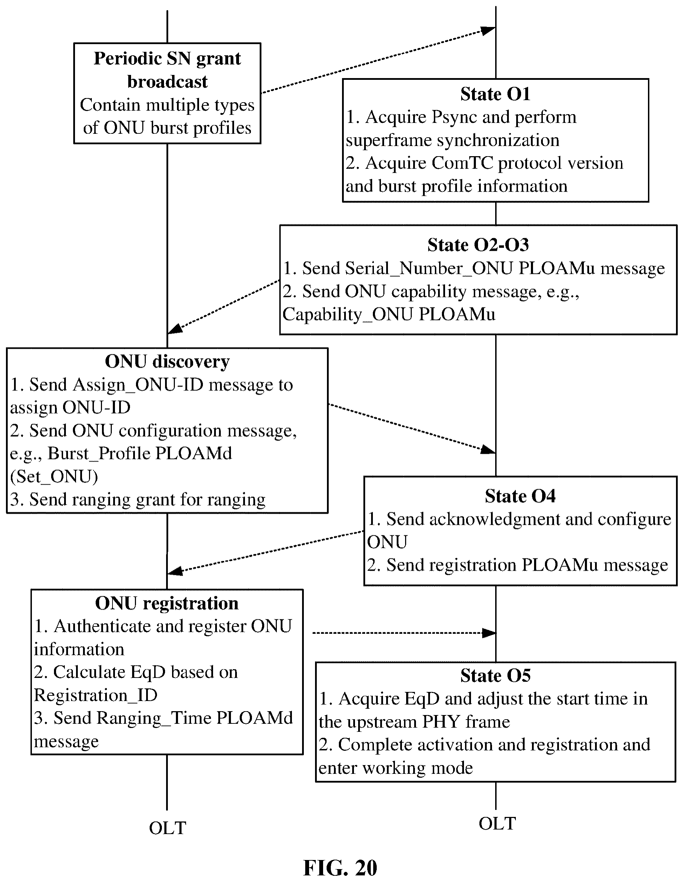

FIG. 19 is a diagram of flexible configuration in an activation and registration phase according to an embodiment of the present application. FIG. 20 is a diagram of flexible configuration in an activation and registration phase according to an embodiment of the present application. For case (1), the configuration diagram is shown in FIG. 19. For case (2), the configuration diagram is shown in FIG. 20.

As shown in FIG. 19, during operation, the OLT periodically performs serial number grant (SN grant) broadcast. The broadcast content includes the specific configuration content possessed by each ONU. When the ONU accesses the PON system, the ONU enters the O1 initial state and receives the general synchronization data PSync of the OLT according to the specific configuration content of the ONU to obtain the superframe synchronization in the downstream direction. After synchronization, other data, such as protocol version and burst profile, is obtained. Then, the ONU enters the O2-3 state and sends the Serial_Number_ONU PLOAM message to the OLT to notify that a new ONU has accessed the system, as well as a first message containing the ONU's own capabilities, such as the Capability_ONU message. Next, the OLT detects that a new ONU has accessed the system and then sends the Assign_ONU-ID message to assign an ONU-ID to the ONU. In addition, the OLT sends a second message (such as Burst_Profile PLOAM) to configure the ONU according to certain criteria that may be rules manually set at the central office or results automatically determined and output by the system. At this phase, the OLT may also send a Ranging grant to perform ranging for the ONU. Upon receiving the ONU-ID and configuration information, the ONU can configure, for example, modulation scheme, line coding, FEC encoding and decoding, and switchable clock frequency. In addition, the ONU in the O4 state also needs to send the Registration PLOAM message to the OLT for registration. After receiving the registration message from the ONU, the OLT may further perform authentication and calculate the equivalent delay (EqD) between the OLT and the ONU based on the Registration_ID. After the calculation is completed, the OLT informs the ONU by sending the Ranging_Time PLOAM message. Finally, the ONU acquires the EqD, completes the activation and registration process, enters the O5 operational state, and adjusts the start time of its upstream frame during the transmission phase of its upstream physical frame based on the EqD.

As shown in FIG. 20, during operation, the OLT periodically broadcasts serial number grants. Unlike FIG. 19, the broadcast content includes dedicated configuration information for multiple types of ONUs so that ONUs with different capabilities can receive their respective dedicated synchronization data to complete superframe synchronization. The broadcasted ONU categories are constrained by the types of ONUs that the operator's overall network accesses. For each ONU accessing the PON system, each uses its own transceiver to receive and transmit signals. The process is similar to that in FIG. 19 (the following operations 1 to 6 correspond to FIG. 19), namely:
(1) When the ONU accesses the PON system, the ONU enters the O1 initial state and receives the dedicated synchronization data PSync of the OLT according to the dedicated configuration content of the ONU to obtain the superframe synchronization in the downstream direction. After synchronization, other data, such as protocol version and burst profile, is obtained. (2) Then, the ONU enters the O2-3 state and sends the Serial_Number_ONU PLOAM message to the OLT to notify that a new ONU has accessed the system, as well as a first message containing the ONU's own capabilities, such as the Capability_ONU message. (3) Next, the OLT detects that a new ONU has accessed the system and then sends the Assign_ONU-ID message to assign an ONU-ID to the ONU. In addition, the OLT sends a second message (such as Burst_Profile PLOAM) to configure the ONU according to certain criteria that may be rules manually set at the central office or results automatically determined and output by the system. At this phase, the OLT may also send a Ranging grant to perform ranging for the ONU. (4) Upon receiving the ONU-ID and configuration information, the ONU can configure, for example, modulation scheme, line coding, FEC encoding and decoding, and switchable clock frequency. In addition, the ONU in the O4 state also needs to send the Registration PLOAM message to the OLT for registration. (5) After receiving the registration message from the ONU, the OLT may further perform authentication and calculate the equivalent delay (EqD) between the OLT and the ONU based on the Registration_ID. After the calculation is completed, the OLT informs the ONU by sending the Ranging_Time PLOAM message. (6) Finally, the ONU acquires the EqD, completes the activation and registration process, enters the O5 operational state, and adjusts the start time of its upstream frame during the transmission phase of its upstream physical frame based on the EqD.

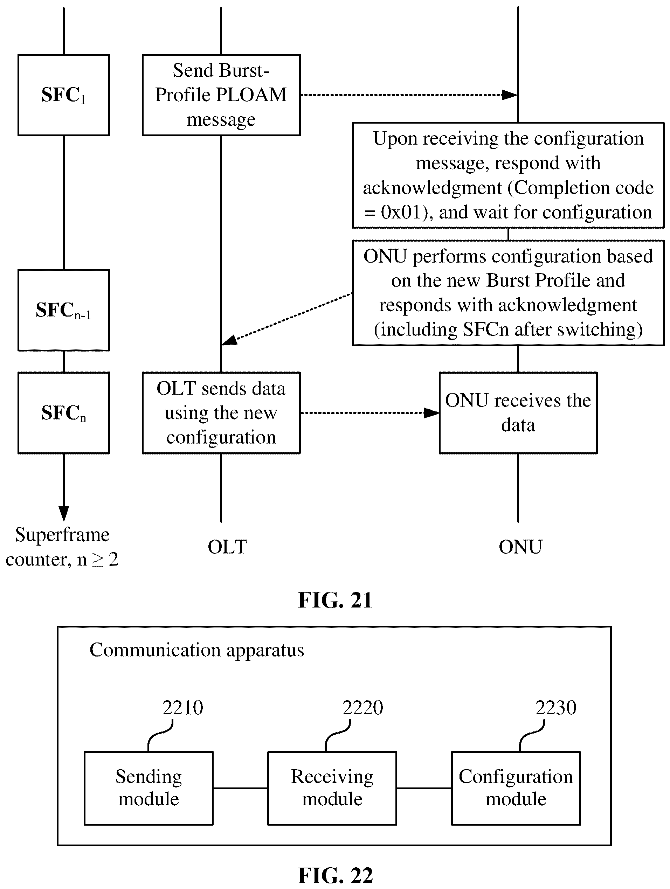

FIG. 21 is a diagram of flexible configuration in a working state according to an embodiment of the present application. As shown in FIG. 21, for real-time configuration and interaction during the operational state:
(1) First, assuming that at the SFC1 superframe time, the OLT sends a second message (for example, the Burst_Profile PLOAM message) to the ONU that requires a configuration update. (2) Then, after receiving the configuration message, the ONU feeds back a configuration acknowledgment message (or may not send any feedback), for example, the Acknowledgement PLOAM message (for example, Completion code = 0x01), and waits for the ONU to complete the new configuration. (3) Then, the ONU updates configuration according to the new Burst_Profile sent by the OLT. After completion, the ONU feeds back an acknowledgement message-also possibly via the Acknowledgement PLOAM message-and informs the OLT of the configuration effective superframe information. (4) Finally, the OLT, based on the configuration effective superframe information fed back by the ONU, such as superframe number SFCn, uses the new configuration to send downstream data at the agreed effective time, and the ONU also receives data at the corresponding time.

It is to be noted that:
(1) The agreed effective time of the configuration can either be reported by the ONU or specified by the OLT. This is not limited in the present application.
(2) The capability information of the ONU has already been reported during the activation and registration phase and can also be reported during the operational state of the ONU upon the request of the OLT. This is not limited in the present application.
(3) The ONU configuration switching request may be initiated either by the OLT or by the ONU. This is not limited in the present application. Regardless of whether the request is initiated by the OLT or the ONU, the general process is as follows: First, the OLT acquires the capability information of the ONU during the activation and registration phase or during the operational state of the ONU; next, the OLT sends configuration information, such as the Burst_Profile PLOAM message; then, the ONU receives the configuration message and either configures itself autonomously or modifies its device settings as instructed by the OLT, such as changing the FEC code type; and finally, the configuration effective time is agreed upon, and the OLT and the ONU perform information transmission using the new configuration.
(4) Interaction messages for configuration of the flexible PON system

For the definitions of the messages in the preceding configuration and interaction processes, see Tables 1 through 4.

**Table 1 Upstream Capability_ONU PLOAM message**

| Octet | Content | Description |
|---|---|---|
| 1-2 | ONU-ID | The ONU-ID of the ONU sending this message |
| 3 | Message type ID | 0x03, "Capability_ONU" |
| 4 | SeqNo | 0x00: reported during the activation/registration phase; 0x01: reported during the working mode phase |
| 5 | Modulation | 0xAB: A = 0: IM-DD not supported; A = 1: IM-DD supported; B = 0: Coherent not supported; B = 1: Coherent supported; Other values of A and B are reserved |
| 6 | Line code | 0xCD: C = 0: NRZ not supported; C = 1: NRZ supported; D = 0: PAM4 not supported; D = 1: PAM4 supported; Other values of C and D are reserved |
| 7-10 | FEC | 0xABCDEFGH:E = 0: FEC1 not supported; E = 1: FEC1 supported; F = 0: FEC2 not supported; F = 1: FEC2 supported; G = 0: FEC3 not supported; G = 1: FEC3 supported; H = 0: FEC4 not supported; H = 1: FEC4 supported; A, B, C, D are reserved |
| 11-40 | Padding | Zero padding, reserved |
| 41-48 | MIC | Message integrity check |

Table 1 describes an example of a newly defined Capability_ONU PLOAM message for the ONU to report its own capabilities. Table 1 illustrates the ONU's flexibly configurable capabilities for modulation scheme, line coding, and forward error correction (FEC) coding. Other configurable capabilities can also be further extended within this message. This is not limited in the present application.

**Table 2 Downstream Burst_Profile PLOAM message configuration**

| Octet | Content | Description |
|---|---|---|
| 1-5 | ... | ... |
| | | NNMMDDCF, where: |
| | | NN - Total number of PSBu segments minus 1, range 0..3. |
| | | MM - zero-based contiguous PSBu segment sequence number, range 0..NN. PSBu segments transmitted on the optical channel will be concatenated in the order provided by this field, where zero corresponds to the PSBu segment transmitted first. If MM>NN, then discard the message. |
| | | DD - Delimiter length in 32-bit words; two-bit integer, range 0..2. |
| | | C - Cross-channel burst profile indicator (TWDM only) |
| 6 | Burst Profile Control 2 | C = 0: The burst profile is applicable to this channel |
| | | C = 1: The burst profile is applicable as if it was transmitted in the downstream wavelength channel identified by Downstream PON ID provided by octets 35-38 of this message. |
| | | F - Upstream FEC indication: |
| | | F = 1: FEC on; |
| | | F = 0: FEC off. |
| | | The content of NN, C and F are set and are valid only in the first message corresponding to a particular burst profile (i.e., when MM=0). |

Table 2 is an example of a revision to the Burst_Profile message defined in ITU-T G.9804.2, where the delimiter length unit indicator DD originally in Octet 7 is moved to the corresponding position in Octet 6-Burst Profile Control 2. Table 3 redefines each bit of Octet 7 in the original Burst_Profile message: AA specifies the ONU's modulation scheme; BB specifies the ONU's line coding; CC specifies the ONU's downstream forward error correction decoding code type; and DD specifies the ONU's upstream forward error correction encoding code type.

**Table 3 Burst_Profile PLOAM message configuration**

| Octet | Content | Description |
|---|---|---|
| 7 | Burst Profile Control 3 | AABBCCDD, where: |
| | | AA- Set ONU modulation method, |
| | | AA = 0: modulation 1; |
| | | AA = 1: modulation 2; |
| | | AA = 2: modulation 3; |
| | | AA = 3: modulation 4; |
| | | BB - Set ONU line code, |
| | | BB = 0: line code 1; |
| | | BB = 1: line code 2; |
| | | BB = 2: line code 3; |
| | | BB = 3: line code 4; |
| | | CC - Set ONU FEC codeword used in the downstream, |
| | | CC = 0: downstream FEC codeword 1; |
| | | CC = 1: downstream FEC codeword 2; |
| | | CC = 2: downstream FEC codeword 3; |
| | | CC = 3: downstream FEC codeword 4; |
| | | DD - Set ONU FEC codeword used in the upstream, |
| | | DD = 0: upstream FEC codeword 1; |
| | | DD = 1: upstream FEC codeword 2; |
| | | DD = 2: upstream FEC codeword 3; |
| | | DD = 3: upstream FEC codeword 4; |
| 8-48 | ... | ... |

As described in Table 3, if the ONU has additional capabilities that require flexible configuration, it is feasible to make further extensions by newly defining the meanings of specific bits in Burst_Profile. This is not limited in the present application.

**Table 4 Upstream Acknowledgement PLOAM message configuration**

| Octet | Content | Description |
|---|---|---|
| 1-9 | ... | ... |
| | | RRRRSSSS, where: |
| | | RRRR - represents modulation, line code, FEC; |
| | | RRRR = 1: modulation configuration failure; |
| | | RRRR = 2: line code configuration failure; |
| 10 | ONU profile setting failure responses | RRRR = 3: FEC configuration failure; |
| | | Other values of RRRR are reserved; |
| | | SSSS - represents the reason for configuration failure; |
| | | SSSS = 1: parameter error; |
| | | SSSS = 2: processing error; |
| | | SSSS = 3: unsupported type; |
| | | Other values of SSSS are reserved; |
| | | This Octet is valid only when the value of Octet 5 (completion code) is not 0x00; otherwise, these bits are cleared by the transmitter and ignored by the OLT receiver (cleared when configuration succeeds). |
| 11-12 | ONU profile switching SFC | The last 16 bits of the SFC indicate the superframe from which the ONU starts using the new configuration for data transmission and reception. |
| | | When the value of Octet 5 (completion code) is not 0x00, these bits are cleared by the transmitter and ignored by the OLT receiver (because the ONU profile switching fails). |
| 13-48 | ... | ... |

Table 4 defines a new feedback message for the content of the Burst_Profile message received by the ONU. Similarly, Table 4 also serves as an example of a revision to the Acknowledgement PLOAM defined in ITU-T G.9804.2. If the ONU has additional information to report to the OLT during the flexible configuration process, it is feasible to make further extensions by newly defining the meanings of specific bits in this message. This is not limited in the present application.

By way of example, in Table 4, Octet 10 feeds back the category and reason for an ONU configuration failure; and Octets 11-12 feeds back the SFC superframe information indicating the effective time of the ONU configuration, such as using the last 16 bits of the 51-bit complete superframe number as the ONU configuration effective superframe information agreed with the OLT.

In an embodiment, FIG. 22 is a block diagram of a communication apparatus according to an embodiment of the present application. This embodiment is applied to a first communication device. As shown in FIG. 22, the communication apparatus of this embodiment includes a sending module 2210, a receiving module 2220, and a configuration module 2230.

The sending module 2210 is configured to send a first message to a second communication device, where the first message includes flexible configuration content supported by the first communication device.

The receiving module 2220 is configured to receive a second message determined by the second communication device according to the first message. The second message includes a first communication device identifier and specific configuration content.

The configuration module 2230 is configured to configure the first communication device according to the second message to enable the first communication device to operate according to the specific configuration content.

In an embodiment, the first message includes at least one piece of the following flexible configuration content: a modulation and demodulation scheme; line coding; forward error correction encoding and decoding; upstream and downstream wavelength options; upstream and downstream sub-wavelength options; or a switchable clock frequency.

In an embodiment, the communication apparatus applied to the first communication device also includes a receiving module 2220.

The receiving module 2220 is also configured to receive dedicated synchronization data sent by the second communication device to receive dedicated configuration content sent by the second communication device. Correspondingly, the configuration module is also configured to configure the first communication device according to the dedicated configuration content to enable the first communication device to operate according to the dedicated configuration content.

In an embodiment, the communication apparatus applied to the first communication device also includes a receiving module 2220.

The receiving module 2220 is also configured to receive general synchronization data sent by the second communication device to receive the specific configuration content sent by the second communication device. The specific configuration content includes basic configuration content or dedicated configuration content.

In an embodiment, the communication apparatus applied to the first communication device also includes a feedback module.

The feedback module is configured to feed back a configuration acknowledgement message carrying configuration effective superframe information to the second communication device to enable the second communication device to send downstream data at an effective time according to the configuration effective superframe information. The receiving module is also configured to receive, at the effective time, the downstream data sent by the second communication device.

In an embodiment, the specific configuration content in the second message includes at least one of the following: a modulation and demodulation scheme used by the first communication device, line coding used by the first communication device, a forward error correction decoding code type used by the first communication device in a downstream direction; a forward error correction encoding code type used by the first communication device in an upstream direction; upstream and downstream wavelength or sub-wavelength options used by the first communication device; or a clock frequency to which the first communication device is switched.

In an embodiment, the configuration acknowledgement message includes at least a category and a cause of a configuration failure of the first communication device; and the configuration effective superframe information of the first communication device.

In an embodiment, the communication apparatus applied to the first communication device also includes an identification and splitting module and an input module.

The identification and splitting module is configured to perform, according to an optical signal feature, signal identification and splitting on an optical signal sent by the second communication device. The input module is configured to input optical signals with a similar optical signal feature to a corresponding demodulation module for demodulation.

In an embodiment, in the upstream direction, the communication apparatus applied to the first communication device also includes a generation module.

The generation module is configured to generate an upstream physical frame and transmit an optical signal to the second communication device according to specific transmission configuration content.

In an embodiment, the specific transmission configuration content includes basic transmission configuration content or dedicated transmission configuration content; and the basic transmission configuration content and the dedicated transmission configuration content each include at least one of the following: upstream line coding, a modulation and demodulation scheme, forward error correction encoding, an upstream rate, or a transmission wavelength.

In an embodiment, in the upstream direction, an upstream data frame structure of the first communication node includes at least a first-type data frame.

In an embodiment, an upstream framing sub-layer (FS) frame of the first-type data frame uses first-type line coding or second-type line coding; and the first-type line coding and the second-type line coding use the same forward error correction code type.

In an embodiment, an upstream FS frame of the first-type data frame uses first-type line coding or second-type line coding; and the first-type line coding uses a first-type forward error correction code type, and the second-type line coding uses a second-type forward error correction code type.

The communication apparatus of this embodiment is configured to implement the communication method applied to the first communication device according to the embodiment shown in FIG. 2 and has similar implementation principles and technical effects. The details are not repeated here.

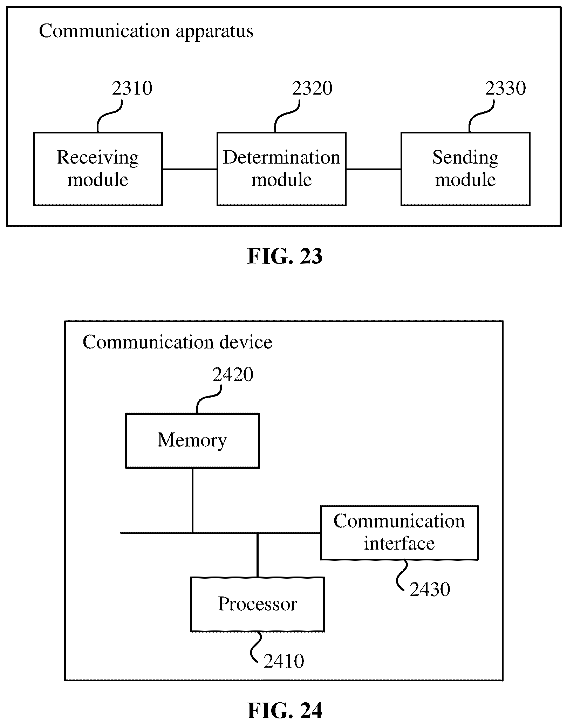

In an embodiment, FIG. 23 is a block diagram of a communication apparatus according to an embodiment of the present application. This embodiment can be implemented by the second communication device. In this example, the second communication device (also referred to as the second communication node) may be an OLT. As shown in FIG. 23, this embodiment includes a receiving module 2310, a determination module 2320, and a sending module 2330.

The receiving module 2310 is configured to receive a first message sent by each first communication device. The first message includes flexible configuration content supported by the first communication device.

The determination module 2320 is configured to determine a corresponding second message according to the first message. The second message includes a first communication device identifier and specific configuration content.

The sending module 2330 is configured to send the second message to the first communication device to enable the first communication device to receive the second message and perform configuration and operate according to the specific configuration content.

In an embodiment, the communication apparatus applied to the second communication device also includes a configuration module.

The configuration module is configured to configure, according to the second message, configuration content of the second communication device corresponding to the first communication device. The configuration content of the second communication device corresponding to the first communication device includes at least one piece of the following flexible configuration content: a modulation and demodulation scheme; line coding; forward error correction encoding and decoding; upstream and downstream wavelength options; or upstream and downstream sub-wavelength options.

In an embodiment, in the communication apparatus applied to the second communication device, the sending module 2330 is also configured to send dedicated synchronization data to the first communication device to enable the first communication device to receive dedicated configuration content; and configure the first communication device according to the dedicated configuration content to enable the first communication device to operate according to the dedicated configuration content.

In an embodiment, in the communication apparatus applied to the second communication device, the sending module 2330 is also configured to send general synchronization data to the first communication device to enable the first communication device to receive the specific configuration content. The specific configuration content includes basic configuration content or dedicated configuration content.

In an embodiment, in the communication apparatus applied to the second communication device, the receiving module 2310 is also configured to receive a configuration acknowledgement message that is fed back by the first communication device and that carries configuration effective superframe information. The sending module is also configured to send downstream data to the first communication device at an effective time according to the configuration effective superframe information.

In an embodiment, the configuration acknowledgement message includes at least a category and a cause of a configuration failure of the first communication device; and the configuration effective superframe information of the first communication device.

In an embodiment, in the downstream direction, the communication apparatus applied to the second communication device also includes a grouping module and a generation module.

The grouping module is configured to group service data units of the first communication device according to attribute information to obtain a corresponding service data unit set. The generation module is configured to perform attribute indication and generate a downstream data frame according to attribute information of each service data unit set in a frame structure. The attribute information includes one of the following: optical network unit (ONU) line coding, forward error correction decoding, or a synchronization data block required by an ONU.

In an embodiment, in the upstream direction, the communication apparatus applied to the second communication device also includes a selection module.

The selection module is configured to select, according to bandwidth allocation, a receiver matching specific transmission configuration content of the first communication device to receive an optical signal. The receiver satisfies a dedicated receiving configuration requirement matching the specific transmission configuration content of the first communication device and receives information transmitted by the first communication device.

In an embodiment, the specific receiving configuration requirement includes a basic receiving configuration requirement or a dedicated receiving configuration requirement; and the basic receiving configuration requirement and the dedicated receiving configuration requirement each include at least one of the following: line coding, a demodulation scheme, forward error correction decoding, an upstream rate, a receiving wavelength option, or a receiving sub-wavelength option.

In an embodiment, in the downstream direction, a downstream data frame structure of the second communication device includes at least one of the following: a first-type data frame, a second-type data frame, a third-type data frame, or a fourth-type data frame.

In an embodiment, a downstream framing sub-layer (FS) frame of the first-type data frame uses first-type line coding or second-type line coding; and the first-type line coding and the second-type line coding use the same forward error correction code type.

In an embodiment, a downstream FS frame of the first-type data frame uses first-type line coding or second-type line coding; and the first-type line coding uses a first-type forward error correction code type, and the second-type line coding uses a second-type forward error correction code type.

In an embodiment, a downstream FS frame of the second-type data frame uses first-type line coding or second-type line coding; and the first-type line coding and the second-type line coding use a first-type forward error correction code type and a second-type forward error correction code type.

In an embodiment, both a downstream FS frame of the third-type data frame and a downstream FS frame of the fourth-type data frame use first-type line coding and second-type line coding; and both the third-type line coding and the fourth-type line coding use a first-type forward error correction code type or a second-type forward error correction code type.

The communication apparatus of this embodiment is configured to implement the communication method applied to the second communication device according to the embodiment shown in FIG. 3 and has similar implementation principles and technical effects. The details are not repeated here.

In an embodiment, FIG. 24 is a diagram illustrating the structure of a communication device according to an embodiment of the present application. As shown in FIG. 24, the device of the present application includes a processor 2410, a memory 2420, and a communication interface 2430. One or more processors 2410 may be provided in the device. FIG. 24 shows one processor 2410 as an example. One or more memories 2420 may be provided in the device. FIG. 24 shows one memory 2420 as an example. The processor 2410, the memory 2420, and the communication interface 2430 in the device may be connected via a bus or in other manners. FIG. 24 shows the connection via a bus as an example. In this embodiment, the device may be a first communication device.

As a computer-readable storage medium, the memory 2420 may be configured to store software programs and computer-executable programs and modules, such as program instructions/modules (for example, the sending module 2210, the receiving module 2220, and the configuration module 2230 in the communication apparatus applied to the first communication device) corresponding to the device according to any embodiment of the present application. The memory 2420 may include a program storage region and a data storage region. The program storage region may store an operating system and an application program required by at least one function. The data storage region may store data created according to the use of the device. Additionally, the memory 2420 may include a high-speed random-access memory and may also include a nonvolatile memory such as at least one disk memory, a flash memory, or another nonvolatile solid-state memory. In some examples, memories 2420 remote from the processor 2410 and connectable to the device via a network may be provided. Examples of the network include the Internet, an intranet, a local area network, a mobile communication network and a combination thereof. The communication interface 2430 is configured to enable communication between the first communication device and the second communication device.

When the communication device is the first communication device, the device may be configured to perform the communication method applied to the first communication device according to any previous embodiment and has corresponding functions and effects.

When the communication device is the second communication device, the device may be configured to perform the communication method applied to the second communication device according to any previous embodiment and has corresponding functions and effects.

An embodiment of the present application also provides a storage medium containing computer-executable instructions which, when executed by a computer processor, cause the processor to perform the communication method applied to the first communication device. The communication method applied to the first communication device includes sending a first message to a second communication device, where the first message includes flexible configuration content supported by the first communication device; receiving a second message determined by the second communication device according to the first message, where the second message includes a first communication device identifier and specific configuration content; and configuring the first communication device according to the second message to enable the first communication device to operate according to the specific configuration content.

An embodiment of the present application also provides a storage medium containing computer-executable instructions which, when executed by a computer processor, cause the processor to perform the communication method applied to the second communication device. The communication method applied to the second communication device includes receiving a first message sent by each first communication device, where the first message includes flexible configuration content supported by the first communication device; determining a corresponding second message according to the first message, where the second message includes a first communication device identifier and specific configuration content; and sending the second message to the first communication device to enable the first communication device to receive the second message and perform configuration and operate according to the specific configuration content.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable to the local technical environment and may be implemented by using any suitable data storage technology. For example, the memory may be a read-only memory (ROM), a random access memory (RAM), an optical memory apparatus and system (digital video disc (DVD) or compact disc (CD)), or the like. Computer-readable media may include non-transitory storage media. The data processor may be of any type suitable to the local technical environment, such as a general purpose computer, a special purpose computer, a microprocessor, a digital signal processing (DSP), an application-specific integrated circuit (ASIC), a field-programmable gate array (FPGA), and a processor based on a multi-core processor architecture.

## Claims

1. A communication method, the method being applied to a first communication device and comprising:
sending a first message to a second communication device, wherein the first message comprises flexible configuration content supported by the first communication device;
receiving a second message determined by the second communication device according to the first message, wherein the second message comprises a first communication device identifier and specific configuration content; and
configuring the first communication device according to the second message to enable the first communication device to operate according to the specific configuration content.

2. The method of claim 1, wherein the first message comprises at least one piece of the following flexible configuration content: a modulation and demodulation scheme; line coding; forward error correction encoding and decoding; upstream and downstream wavelength options; upstream and downstream sub-wavelength options; or a switchable clock frequency.

3. The method of claim 1, further comprising:
receiving dedicated synchronization data sent by the second communication device to receive dedicated configuration content sent by the second communication device;
wherein configuring the first communication device according to the second message to enable the first communication device to operate according to the specific configuration content comprises:
configuring the first communication device according to the dedicated configuration content to enable the first communication device to operate according to the dedicated configuration content.

4. The method of claim 1, further comprising:
receiving general synchronization data sent by the second communication device to receive the specific configuration content sent by the second communication device, wherein the specific configuration content comprises basic configuration content or dedicated configuration content.

5. The method of claim 1, further comprising:
feeding back a configuration acknowledgement message carrying configuration effective superframe information to the second communication device to enable the second communication device to send downstream data at an effective time according to the configuration effective superframe information; and
receiving, at the effective time, the downstream data sent by the second communication device.

6. The method of any one of claims 1 to 5, wherein the specific configuration content in the second message comprises at least one of the following: a modulation and demodulation scheme used by the first communication device, line coding used by the first communication device, a forward error correction decoding code type used by the first communication device in a downstream direction; a forward error correction encoding code type used by the first communication device in an upstream direction; upstream and downstream wavelength or sub-wavelength options used by the first communication device; or a clock frequency to which the first communication device is switched.

7. The method of claim 5, wherein the configuration acknowledgement message comprises at least a category and a cause of a configuration failure of the first communication device; and the configuration effective superframe information of the first communication device.

8. The method of claim 1, in a downstream direction, further comprising:
performing, according to an optical signal feature, signal identification and splitting on an optical signal sent by the second communication device; and
inputting optical signals with a similar optical signal feature to a corresponding demodulation module for demodulation.

9. The method of claim 1, in an upstream direction, further comprising:
generating an upstream physical frame and transmitting an optical signal to the second communication device according to specific transmission configuration content.

10. The method of claim 9, wherein the specific transmission configuration content comprises basic transmission configuration content or dedicated transmission configuration content; and the basic transmission configuration content and the dedicated transmission configuration content each comprise at least one of the following: upstream line coding, a modulation and demodulation scheme, forward error correction encoding, an upstream rate, or a transmission wavelength.

11. The method of claim 1, wherein in an upstream direction, an upstream data frame structure of the first communication node comprises at least a first-type data frame.

12. The method of claim 11, wherein an upstream framing sub-layer, FS, frame of the first-type data frame uses first-type line coding or second-type line coding; and the first-type line coding and the second-type line coding use a same forward error correction code type.

13. The method of claim 11, wherein an upstream FS frame of the first-type data frame uses first-type line coding or second-type line coding; and the first-type line coding uses a first-type forward error correction code type, and the second-type line coding uses a second-type forward error correction code type.

14. A communication method, the method being applied to a second communication device and comprising:
receiving a first message sent by each first communication device, wherein the first message comprises flexible configuration content supported by the first communication device;
determining a corresponding second message according to the first message, wherein the second message comprises a first communication device identifier and specific configuration content; and
sending the second message to the first communication device to enable the first communication device to receive the second message and perform configuration and operate according to the specific configuration content.

15. The method of claim 14, further comprising:
configuring, according to the second message, configuration content of the second communication device corresponding to the first communication device, wherein
the configuration content of the second communication device corresponding to the first communication device comprises at least one piece of the following flexible configuration content: a modulation and demodulation scheme; line coding; forward error correction encoding and decoding; upstream and downstream wavelength options; or upstream and downstream sub-wavelength options.

16. The method of claim 14, further comprising:
sending dedicated synchronization data to the first communication device to enable the first communication device to receive dedicated configuration content; and
configuring the first communication device according to the dedicated configuration content to enable the first communication device to operate according to the dedicated configuration content.

17. The method of claim 14, further comprising:
sending general synchronization data to the first communication device to enable the first communication device to receive the specific configuration content, wherein the specific configuration content comprises basic configuration content or dedicated configuration content.

18. The method of claim 14, further comprising:
receiving a configuration acknowledgement message that is fed back by the first communication device and that carries configuration effective superframe information; and
sending downstream data to the first communication device at an effective time according to the configuration effective superframe information.

19. The method of claim 18, wherein the configuration acknowledgement message comprises at least a category and a cause of a configuration failure of the first communication device; and the configuration effective superframe information of the first communication device.

20. The method of claim 14, in a downstream direction, further comprising:
grouping service data units of the first communication device according to attribute information to obtain a corresponding service data unit set; and
performing attribute indication and generating a downstream data frame according to attribute information of each service data unit set in a frame structure;
wherein the attribute information comprises one of the following: optical network unit, ONU, line coding, forward error correction decoding, or a synchronization data block required by an ONU.

21. The method of claim 14, in an upstream direction, further comprising:
selecting, according to bandwidth allocation, a receiver matching specific transmission configuration content of the first communication device to receive an optical signal, wherein the receiver satisfies a dedicated receiving configuration requirement matching the specific transmission configuration content of the first communication device and receives information transmitted by the first communication device.

22. The method of claim 14, wherein the specific receiving configuration requirement comprises a basic receiving configuration requirement or a dedicated receiving configuration requirement; and the basic receiving configuration requirement and the dedicated receiving configuration requirement each comprise at least one of the following: line coding, a demodulation scheme, forward error correction decoding, an upstream rate, a receiving wavelength option, or a receiving sub-wavelength option.

23. The method of claim 14, wherein in a downstream direction, a downstream data frame structure of the second communication device comprises at least one of the following: a first-type data frame, a second-type data frame, a third-type data frame, or a fourth-type data frame.

24. The method of claim 23, wherein a downstream framing sub-layer, FS, frame of the first-type data frame uses first-type line coding or second-type line coding; and the first-type line coding and the second-type line coding use a same forward error correction code type.

25. The method of claim 23, wherein a downstream FS frame of the first-type data frame uses first-type line coding or second-type line coding; and the first-type line coding uses a first-type forward error correction code type, and the second-type line coding uses a second-type forward error correction code type.

26. The method of claim 23, wherein a downstream FS frame of the second-type data frame uses first-type line coding or second-type line coding; and the first-type line coding and the second-type line coding use a first-type forward error correction code type and a second-type forward error correction code type.

27. The method of claim 23, wherein both a downstream FS frame of the third-type data frame and a downstream FS frame of the fourth-type data frame use first-type line coding and second-type line coding; and both the third-type line coding and the fourth-type line coding use a first-type forward error correction code type or a second-type forward error correction code type.

28. A first communication device, comprising a memory and at least one processor, wherein
the memory is configured to store at least one program; and
when executed by the at least one processor, the at least one program causes the at least one processor to perform the at least one processor to perform the communication method of any one of claims 1 to 13.

29. A second communication device, comprising a memory and at least one processor, wherein
the memory is configured to store at least one program; and
when executed by the at least one processor, the at least one program causes the at least one processor to perform the communication method of any one of claims 14 to 27.

30. A storage medium storing a computer program which, when executed by a processor, causes the processor to perform the communication method of any one of claims 1 to 13 or the communication method of any one of claims 14 to 27.
